# DEMANDE DE BREVET EUROPEEN

(11) **EP 1 717 429 A1**
(43) Date de publication de la demande: **02.11.2006**
(21) Numéro de dépôt: 06300412.1
(22) Date de dépôt: 27.04.2006
(51) Int. Cl.: F02D 13/02, F02B 29/06, F02B 37/00

(54) **MOTEUR A COMBUSTION INTERNE SURALIMENTE ET PROCEDE DE COMMANDE D'UN TEL MOTEUR**

(30) Priorité: 29.04.2005 FR 0504401
(71) Demandeur: PEUGEOT CITROËN AUTOMOBILES S.A., 78140 Velizy Villacoublay (FR)
(72) Inventeur: PERRARD, William, 78770, ANDELU (FR)
(74) Mandataire: Ménès, Catherine

(57) **Abrégé**

L'invention concerne un moteur à combustion interne (1) suralimenté ayant au moins deux cylindres (2, 4) dont chacun est relié à une tubulure d'admission (21, 41) d'air frais et à une tubulure d'échappement (23, 43) de gaz brûlés, les tubulures d'échappement des cylindres étant reliés à un même collecteur d'échappement (6). Le moteur comprend un dispositif (11) destiné à autoriser l'ouverture de la liaison d'échappement d'un cylindre en cours de remplissage uniquement lorsque les pressions instantanées dans la tubulure d'admission et dans la tubulure d'échappement du cylindre sont dans un rapport prédéterminé de l'une à l'autre tel qu'un post-remplissage du cylindre avec de l'air frais préalablement stocké dans la tubulure d'échappement est assuré.

L'invention concerne également un procédé de commande d'un tel moteur à combustion interne.

## Description

L'invention concerne un moteur à combustion interne suralimenté ainsi qu'un procédé de commande d'un tel moteur.

L'invention concerne les moteurs à combustion interne suralimentés quel que soit leur carburant ou leur mode de fonctionnement. L'invention concerne donc aussi bien les moteurs diesel suralimentés que les moteurs à essence ou à gaz suralimentés avec injection directe de l'essence ou du gaz dans le cylindre. L'invention concerne également les moteurs à deux temps et les moteurs à quatre temps.

Pour améliorer le rendement des moteurs à combustion interne suralimentés, on utilise déjà ce qui est appelé le « balayage tubulure d'admission / cylindre / tubulure d'échappement » avec de l'air frais. Ce balayage est effectué en quelque sorte à cheval sur deux des quatre étapes de tout fonctionnement d'un moteur à combustion interne et qui sont l'admission d'air frais dans un cylindre, compression de l'air frais, combustion d'un carburant injecté dans l'air comprimé et éjection (échappement) des gaz brûlés. Le balayage avec air frais est alors effectué à cheval sur les étapes d'admission d'air frais et échappement des gaz brûlés.

Etant donné que l'air frais n'est pas acheminé vers les cylindres du moteur à combustion sous la pression de l'air ambiant mais sous la pression de sortie du dispositif de suralimentation, le rapport entre la pression des gaz d'échappement, élevée par nature, et la pression de leur admission, fonction des caractéristiques du dispositif de suralimentation, dépend des caractéristiques du dispositif de suralimentation. Le dispositif de suralimentation est en général un turbocompresseur, la turbine étant entraînée par les gaz d'échappement et le compresseur étant entraîné par la turbine. Le dispositif de suralimentation a une plage de rendement optimale de fonctionnement soit à haut régime soit à bas régime, mais jamais sur l'étendue totale du régime de fonctionnement. En conséquence, il faut déterminer une plage de régime principale pour le fonctionnement du dispositif de suralimentation et choisir un dispositif de suralimentation approprié.

Lorsque l'on privilégie le régime haut, c'est-à-dire lorsque l'on choisit un dispositif de suralimentation permettant de fournir au moteur une pression de suralimentation efficace à haut régime, on admet un déficit de pression de suralimentation à bas régime. En contrepartie, le choix d'un dispositif de suralimentation à haut régime permet de mettre en oeuvre un phénomène appelé « post-remplissage du cylindre avec de l'air frais ». Ce phénomène est obtenu en commandant les ouvertures respectives d'admission et d'échappement d'un cylindre de manière que l'air frais entrant dans les cylindres puisse accéder, pendant une courte période au début de l'admission, aussi à la tubulure d'échappement pour y être stocké. Cette quantité d'air frais est stockée dans la tubulure d'échappement et réinjectée dans le cylindre à la fin de la période de remplissage. Cette réinjection de l'air frais est cependant obtenue seulement lorsque la pression des gaz d'échappement est supérieure à la pression de l'air frais. En même temps, la pression des gaz d'échappement ne doit pas dépasser un rapport prédéterminé entre la pression des gaz d'échappement et la pression de l'air frais pour éviter que, en plus de l'air frais, soient injecté des gaz d'échappement.

Un dispositif de suralimentation à haut régime engendre par contre systématiquement un effet néfaste de post-remplissage des cylindres avec des gaz d'échappement, lorsqu'il fonctionne à bas régime, parce que, à ce régime, la pression instantanée dans la tubulure d'admission est toujours inférieure à la pression instantanée dans la tubulure d'échappement. Ceci se traduit alors par une détérioration du fonctionnement du moteur et de son rendement à bas régime.

Le but de l'invention est d'améliorer le fonctionnement d'un moteur à combustion interne suralimenté de manière à privilégier le bas régime sans pour autant devoir subir des effets néfastes à haut régime.

Le but de l'invention est atteint avec un moteur à combustion interne suralimenté ayant au moins deux cylindres dont chacun est relié à une tubulure d'admission d'air frais et à une tubulure d'échappement de gaz brûlés, les tubulures d'échappement d'au moins deux des cylindres étant reliés à un même collecteur d'échappement et chacune des liaisons entre les cylindres et les tubulures d'admission et d'échappement respectives étant ouvertes et fermées à l'aide de moyens d'ouverture et de fermeture appropriés, les moyens d'ouverture et de fermeture étant commandés par des moyens de commande conformés de manière à assurer, pendant la phase de remplissage d'un premier cylindre, une ouverture simultanée brève de la liaison d'admission et de la liaison d'échappement de ce cylindre afin d'obtenir un balayage tubulure d'admission/cylindre/tubulure d'échappement avec de l'air frais.

Conformément à l'invention, le moteur à combustion interne comprend un dispositif destiné à autoriser une ouverture de la liaison d'échappement du premier cylindre, en cours de remplissage, lorsque la pression instantanée dans la tubulure d'échappement du premier cylindre due à la phase d'échappement d'un deuxième cylindre et la pression instantanée dans la tubulure d'admission du premier cylindre sont dans un rapport prédéterminé de l'une à l'autre tel qu'un post-remplissage du cylindre avec de l'air frais préalablement stocké dans la tubulure d'échappement est assuré.

La présente invention est fondée sur l'idée que, pour un moteur à combustion interne suralimenté, notamment lorsque ce moteur est utilisé dans un véhicule automobile, il est relativement plus important de privilégier le bas régime que le haut régime. En effet, un moteur à combustion interne utilisé dans un véhicule automobile doit fournir le plus grand travail au décollage du véhicule et pendant les phases d'accélération à des vitesses relativement faibles. Le moteur doit donc développer assez vite un couple assez important lorsqu'il tourne encore à bas régime. Contrairement à cela, lorsque le véhicule circule à une vitesse de croisière moyenne ou élevée, lorsque le moteur tourne donc à haut régime, il doit effectuer essentiellement seulement un travail de maintien de la vitesse.

Ainsi, la présente invention permet d'utiliser des turbocompresseurs ayant des turbines de petite taille afin de garantir une pression de suralimentation importante sur une large plage de régime tout en garantissant que l'utilisation de la turbine de petite taille combinée avec l'exploitation des fluctuations de la pression d'échappement afin de provoquer une suralimentation, ne produira pas d'effet néfaste de post-remplissage avec des gaz d'échappement sur l'ensemble de la plage de régime du moteur.

Comme cela ressort de la solution d'amélioration proposée par l'invention, énoncée plus haut, l'invention produit les meilleurs effets sur un moteur à combustion interne suralimenté dont la suralimentation est obtenue à l'aide d'un turbocompresseur et qui est équipé d'un collecteur d'échappement auquel sont reliés, selon le nombre total de cylindres du moteur, les tubulures de plusieurs ou de tous les cylindres afin de favoriser la présence de fluctuations de la pression d'échappement. Par ailleurs, le moteur doit être équipé d'un système d'injection directe de carburant dans les cylindres et d'un système de distribution variable permettant d'intervenir sur l'ouverture de la liaison d'échappement du cylindre vers une tubulure d'échappement.

Comme déjà évoqué plus haut, la présente invention s'applique aussi bien à des moteurs diesel qu'à des moteurs à essence ou à gaz, du moment où ils sont suralimentés, et cela aussi bien en fonctionnement à deux temps qu'en fonctionnement à quatre temps. En conséquence, le moteur à combustion interne suralimenté auquel la présente invention s'applique est pourvu, suivant une expression générale couvrant tout type de moteur, de moyens d'ouverture et de fermeture destiné à relier le cylindre momentanément respectivement à une tubulure d'admission d'air frais ou à une tubulure d'échappement de gaz brûlés. Lorsqu'il s'agit d'un moteur à quatre temps, ces moyens d'ouverture et de fermeture se présentent sous forme de soupapes commandées par des actionneurs de soupapes électriques, électrohydrauliques ou par des systèmes à arbres à came et poussoirs hydrauliques ou encore sous toute autre forme permettant une gestion appropriée du fonctionnement des soupapes d'admission et d'échappement. Lorsque le moteur est un moteur à deux temps, les liaisons entre le cylindre et les tubulures d'admission et d'échappement sont formées par des lumières libérées ou obtérées par le piston coulissant axialement dans le cylindre.

Pour simplifier la description de la présente invention, les moyens d'ouverture et de fermeture assurant respectivement l'ouverture et la fermeture des liaisons entre les cylindres et les tubulures respectives sont représentés ci-après par des soupapes d'admission et des soupapes d'échappement sans pour autant limiter l'application de l'invention à des moteurs à combustion interne suralimentés équipés de tels moyens d'ouverture et de fermeture.

La présente invention permet de faire fonctionner des moteurs à combustion interne suralimentés de manière améliorée pour obtenir un effet de sur-remplissage des cylindres par une utilisation combinée des phases de faible pression instantanée d'échappement pour assurer un balayage avec de l'air frais dans la suite de moyens formée par la tubulure d'admission, le cylindre et la tubulure d'échappement et des phases de forte pression instantanée d'échappement pour effectuer un post-remplissage du cylindre avec de l'air préalablement stocké dans la tubulure d'échappement, mais uniquement lorsque les conditions de pression instantanée sont favorables à un sur-remplissage en air frais, et non pas en gaz d'échappement, du cylindre.

L'effet néfaste d'un sur-remplissage en gaz d'échappement du cylindre est supprimé par un dispositif adapté autorisant ou non une seconde ouverture de la (ou des) soupape (s) d'échappement.

La présente invention favorise, pour améliorer le fonctionnement d'un moteur à combustion interne suralimenté, le choix de dispositifs de suralimentation susceptibles de fournir une pression de suralimentation élevée à faible régime. Lorsque la pression dans la tubulure d'échappement correspondante d'un cylindre considéré présente, en fonction du temps, des fluctuations d'amplitude suffisamment sensibles, le dispositif destiné à autoriser l'ouverture de la liaison d'échappement d'un cylindre en cours de remplissage assure une seconde ouverture ou une ouverture prolongée de la soupape d'échappement du cylindre considéré. Pendant la phase de faible pression d'échappement instantanée présente dans la tubulure d'échappement correspondante du cylindre, cela permet d'assurer un balayage de l'ensemble formé par la tubulure d'admission, le cylindre et la tubulure d'échappement, par de l'air frais. La phase de forte pression d'échappement instantanée due à un autre cylindre en phase d'échappement permet de rouvrir la soupape d'échappement pour effectuer un post-remplissage du cylindre avec de l'air frais préalablement stocké dans la tubulure d'échappement. La question de savoir si le dispositif de l'invention autorise une seconde ouverture de la soupape d'échappement ou plutôt une ouverture prolongée de celle-ci, dépend de la cadence des ouvertures et fermetures des différentes soupapes intervenant dans la production des phénomènes exploités.

Lorsque, par contre, la pression d'échappement instantanée présente dans la tubulure d'échappement est disproportionnellement plus grande que la pression d'admission présente dans la tubulure d'admission du cylindre, le dispositif de commande n'autorise pas l'ouverture de la liaison d'échappement du cylindre en cours de remplissage pour éviter un post-remplissage du cylindre avec des gaz d'échappement.

Le sur-remplissage en air frais des cylindres du moteur ainsi obtenu contribue de façon très sensible à l'amélioration du rendement et du fonctionnement du moteur à combustion interne suralimenté à l'aide d'un turbocompresseur dont la taille était choisie de manière à assurer la suralimentation en air du moteur à bas régime. Par ailleurs, le phénomène de post-remplissage est quasi totalement supprimé par le dispositif destiné à autoriser l'ouverture de la liaison d'échappement d'un cylindre selon le critère prédéterminé, du fait que ce dispositif permet d'ouvrir la ou les soupapes d'échappement d'un cylindre en cours de remplissage uniquement lorsque le rapport entre les pressions instantanées à l'admission et à l'échappement correspond à une plage de valeurs prédéterminée et notamment favorable à un sur-remplissage en air frais du moteur à l'exclusion d'un sur-remplissage en gaz brûlés.

Le but de l'invention est également atteint avec un procédé de commande d'un moteur à combustion interne suralimenté, le moteur comportant au moins deux cylindres dont chacun est relié à une tubulure d'admission d'air frais et à une tubulure d'échappement de gaz brûlés, les tubulures d'échappement des cylindres étant reliés à un même collecteur d'échappement et chacune des liaisons entre les cylindres et les tubulures respectives étant ouvertes et fermées à l'aide de moyens d'ouverture et de fermeture appropriés, les moyens d'ouverture et de fermeture étant commandés de manière à assurer, pendant l'ouverture de la liaison d'admission de l'un des cylindres, une ouverture simultanée de la liaison d'échappement de l'autre cylindre afin d'obtenir un balayage tubulure d'admission / cylindre / tubulure d'échappement avec de l'air frais.

Conformément à l'invention, l'ouverture de la liaison d'échappement simultanément à l'ouverture de la liaison d'admission, est soumise à la condition que les pressions instantanées dans la tubulure d'admission et dans la tubulure d'échappement du cylindre soient dans un rapport prédéterminé de l'une à l'autre tel qu'un post-remplissage du cylindre avec de l'air frais préalablement stocké dans la tubulure d'échappement est assuré.

D'autres caractéristiques et avantages de la présente invention ressortiront de la description ci-après de quelques exemples de mesures de pression et de la présentation d'un schéma rappelant le principe de conception d'un moteur à combustion interne suralimenté.

Dans les dessins annexés :
- la figure 1 présente un exemple de mesure de pression instantanée d'admission et d'échappement ainsi que les levées de soupapes d'admission et d'échappement d'un moteur à combustion interne suralimenté selon l'invention ;
- la figure 2 présente des courbes de couple en fonction du régime d'un moteur à combustion interne suralimenté ;
- la figure 3 représente des mesures de pression de suralimentation et notamment le phénomène néfaste de post-remplissage des cylindres par des gaz d'échappement ; et
- la figure 4 est un schéma de la conception d'un moteur à combustion interne suralimenté.

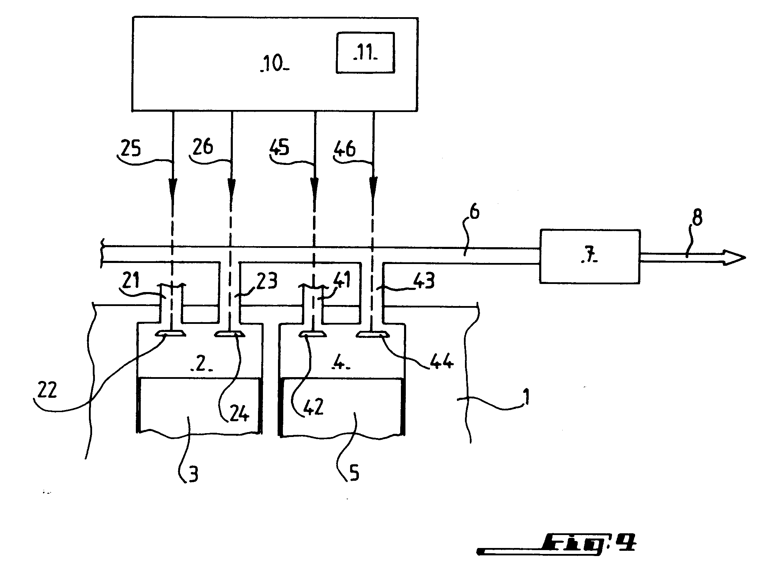

Comme cela est rappelé par la figure 4, un moteur à combustion interne 1 comprend, pour les besoins de la présente invention, au moins deux cylindres 2, 4 dans lesquels sont montés coulissant axialement deux pistons 3, 5. Chacun des cylindres 2, 4 est relié à une tubulure d'admission 21, 41 d'air frais et à une tubulure d'échappement 23, 43 des gaz brûlés. Les tubulures d'échappement 23, 43 des cylindres 2, 4 sont reliées à un même collecteur d'échappement 6 pour pouvoir bénéficier de l'interaction entre les pressions instantanées d'échappement des différents cylindres et pour obtenir ainsi l'effet escompté d'un sur-remplissage d'un cylindre avec de l'air frais préalablement stocké dans la tubulure d'échappement correspondante du cylindre, cet air frais étant injecté dans le cylindre par des gaz d'échappement ayant une forte pression instantanée due à un autre cylindre en phase d'échappement.

Chacune des liaisons entre les cylindres et les tubulures respectives est ouverte et fermée à l'aide de moyens d'ouverture et de fermeture appropriés qui sont représentés sur la figure 4 par des soupapes d'admission 22, 42 et des soupapes d'échappement 24, 44. Les moyens d'ouverture et de fermeture 22, 24, 42, 44 sont commandés par des moyens de commande 10 conformés de manière à assurer, pendant l'ouverture de la liaison d'admission de l'un des cylindres 2, 4, une ouverture simultanée de la liaison d'échappement du même cylindre afin d'obtenir un balayage tubulure d'admission / cylindre / tubulure d'échappement avec de l'air frais.

Afin d'autoriser l'ouverture de la liaison d'échappement d'un cylindre en cours de remplissage uniquement lorsque les pressions instantanées dans la tubulure d'admission 21 ou 41 et dans la tubulure d'échappement 23 ou 43 correspondantes du cylindre sont dans un rapport prédéterminé de l'une des pressions à l'autre, le moteur à combustion interne comprend un dispositif 11 destiné à autoriser l'ouverture de la liaison d'échappement d'un cylindre en cours de remplissage uniquement lorsque le rapport des pressions correspond à des valeurs prédéterminées et lorsque, ainsi, un post-remplissage du cylindre avec de l'air frais préalablement stocké dans la tubulure d'échappement est assuré. Lorsque le rapport des pressions ne correspond pas aux valeurs prédéterminées, lorsqu'il y a donc un risque d'un post-remplissage du cylindre avec des gaz brûlés, le dispositif 11 n'autorise pas l'ouverture de la liaison d'échappement, c'est-à-dire de la soupape 24 ou 44.

Il va sans dire que le moteur à combustion interne 1 est pourvu, à des endroits appropriés, de moyens de mesure de la pression présente dans chacune des tubulures d'admission et d'échappement. Le moteur est également pourvu, pendant la mise au point du dispositif, mais non nécessairement lorsque le moteur est délivré en série, d'un moyen d'évaluation de ces pressions et notamment du rapport entre la pression présente dans une tubulure d'admission et dans une tubulure d'échappement d'un cylindre considéré. Toutefois, pour ne surcharger la figure 4, les moyens de mesure et les moyens d'évaluation n'ont pas été représentés.

De même que les moyens de commande 10 destinés à commander les moyens d'ouverture et de fermeture 22, 24, 42, 44 peuvent être des moyens électromécaniques ou des moyens hydrauliques ou encore des moyens purement mécaniques, les moyens pour mesurer les pressions et les moyens évaluant les rapports entre les pressions ou encore des moyens évaluant une différence vectorielle entre les pressions, à la place de moyens évaluant des rapports entre les pressions, peuvent être des moyens électriques, des moyens électroniques combinés avec des capteurs de pression ou des moyens mécaniques, ou tout autre moyen approprié. Lorsque les moyens de commande 10, le dispositif 11 et les moyens d'évaluation du rapport de pression sont de la même nature technique, par exemple tous électroniques ou tous mécaniques, ces différents moyens de dispositif peuvent être regroupés dans une unité de construction, comme cela est représenté très schématiquement sur la figure 4 par le fait que le dispositif 11 est représenté à l'intérieur des moyens de commande 10.

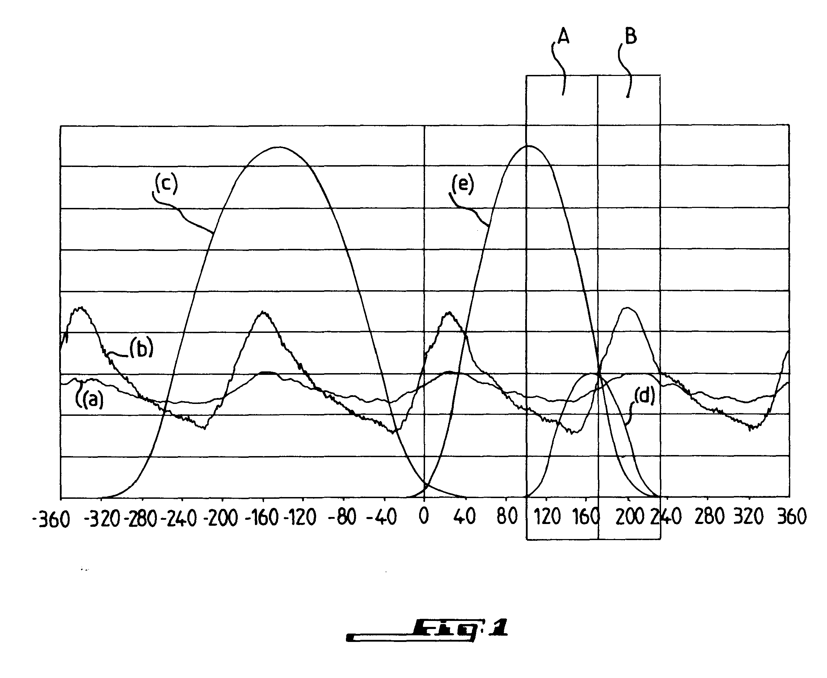

Les figures 1 à 3 représentent l'évolution des pressions dans une tubulure d'admission et dans une tubulure d'échappement d'un cylindre considéré en fonction de la position d'un vilebrequin auquel le piston du cylindre considéré est attaché. De tels diagrammes peuvent être établis pour chacun des cylindres d'un moteur à combustion interne et de ses tubulures d'admission et tubulures d'échappement.

La figure 1 représente un exemple de mesures de pressions instantanées dans une tubulure d'admission et dans une tubulure d'échappement ainsi que les levées des soupapes d'admission et d'échappement correspondantes. La courbe (a) représente la pression d'admission et la courbe (b) représente la pression d'échappement. La courbe (c) représente la première levée de la soupape d'échappement, la courbe (d) représente la seconde levée de la soupape d'échappement et la courbe (e) représente la levée de la soupape d'admission.

Cet exemple illustre une situation dans laquelle la pression instantanée de l'air frais dans la tubulure d'admission est localement plus importante que la pression instantanée des gaz d'échappement dans la tubulure d'échappement. Cette relation entre les pressions peut être exprimée indifféremment comme un rapport entre la pression instantanée dans la tubulure d'échappement et la pression instantanée dans la tubulure d'admission, ce rapport devant alors être inférieur à 1, ou comme une différence vectorielle entre les deux pressions, ce qui résulte en une valeur vectorielle positive vue à partir de la pression instantanée dans la tubulure d'admission. Lorsque la condition de relation posée est remplie, le dispositif 11 destiné à autoriser l'ouverture de la liaison d'échappement du cylindre lorsque la situation des pressions le permet, autorise un balayage dans l'ensemble formé par la tubulure d'admission du cylindre, le cylindre lui-même et la tubulure d'échappement du cylindre, par de l'air frais et commande une seconde ouverture de la soupape d'échappement. Cette situation est représentée sur la figure 1 dans la case A selon une variante de commande, dont la mise en oeuvre dépend du rapport angulaire entre les deux pistons coopérants pour obtenir l'effet recherché de balayage. Lorsque la pression dans la tubulure d'échappement augmente du fait de la phase de vidange d'un autre cylindre et lorsque la soupape d'admission du cylindre en phase d'auto-suralimentation est en phase de fermeture, l'air frais stocké dans la tubulure d'échappement durant la phase 1 est refoulé dans le cylindre et génère ainsi une auto-suralimentation par effet de post-remplissage avec de l'air frais. Cette dernière phase est entourée sur la figure 1 par la case B.

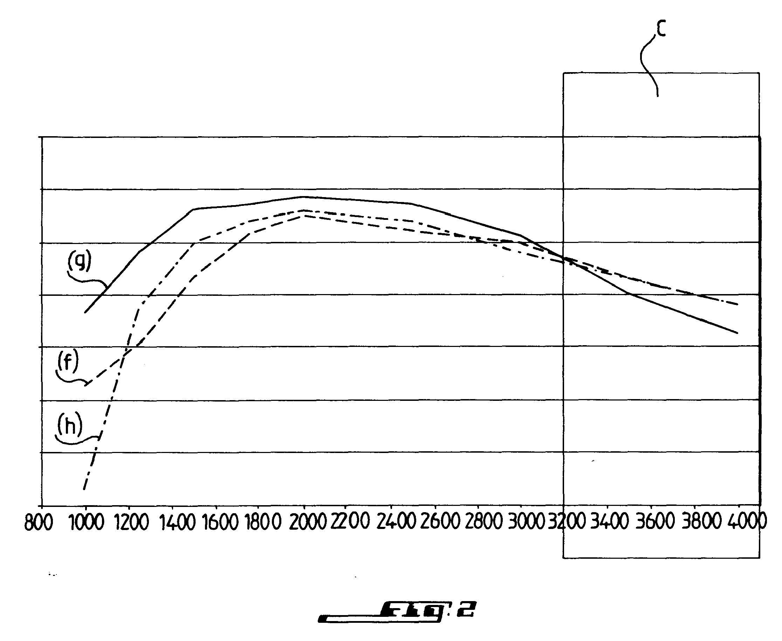

La figure 2 représente des courbes de couple en fonction du régime d'un moteur à combustion interne suralimenté pour différentes configurations de ce moteur. La courbe (f) représente le couple d'un moteur équipé d'un turbocompresseur dont la taille de la turbine a été optimisée afin de fournir au moteur une pression de suralimentation la plus élevée sur une plage de régime la plus importante possible sans recourir à l'auto-suralimentation selon la présente invention. La courbe (g) représente le couple d'un moteur utilisant un turbocompresseur dont la taille de la turbine a été optimisée afin de fournir au moteur une pression de suralimentation la plus élevée possible à haut régime. Cette configuration associe l'auto-suralimentation et une turbine de taille suffisamment importante pour pouvoir limiter le phénomène de post-remplissage à l'aide de gaz d'échappement à un haut régime du moteur.

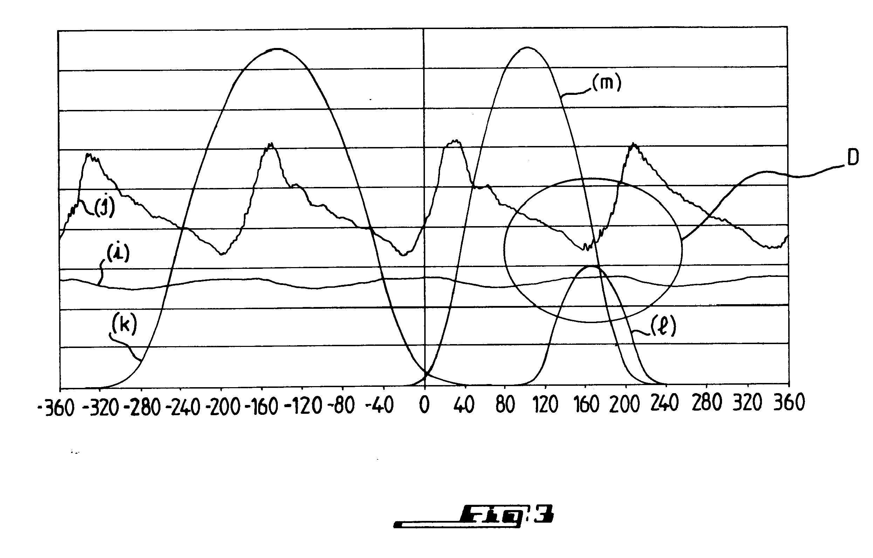

Le choix d'un turbocompresseur ayant une turbine de taille importante peut effectivement permettre de limiter le post-remplissage d'un cylindre avec de l'air frais à l'aide des gaz d'échappement d'un autre cylindre, à un haut régime du moteur. Toutefois, cette configuration ne permet pas de s'affranchir du phénomène de post-remplissage à très faible régime. En conséquence, à faible régime, la turbine du turbocompresseur ne récupère pas suffisamment d'énergie contenue dans les gaz d'échappement pour entraîner le compresseur d'une allure suffisamment vive pour assurer une pression de suralimentation élevée. Ainsi, ce manque de pression de suralimentation conduit, au régime bas du moteur, au phénomène néfaste d'un post-remplissage du cylindre par les gaz d'échappement d'un autre cylindre, puisque la pression instantanée dans la tubulure d'admission correspondante est toujours inférieure à la pression instantanée dans la tubulure d'échappement correspondante. Cette configuration du moteur et du turbocompresseur détériore le rendement du moteur à bas régime, comme cela sera représenté sur la figure 3.

La courbe (g) de la figure 2 représente le couple d'un moteur équipé d'un turbocompresseur dont la taille de la turbine a été optimisée afin de fournir au moteur une pression de suralimentation la plus élevée possible sur une plage de régime la plus importante possible et qui est équipé d'un dispositif permettant d'effectuer une seconde ouverture de la soupape d'échappement, pour bénéficier du phénomène d'auto-suralimentation uniquement lorsque les conditions de pression instantanée dans la tubulure d'admission et la tubulure d'échappement y sont favorables. Dans l'exemple illustré par la courbe (g), le dispositif 11 destiné à autoriser l'ouverture de la liaison d'échappement en seconde levée autorise une telle seconde ouverture de la soupape d'échappement dès le plus bas régime. Ceci active le procédé d'auto-suralimentation, puisque la taille de la turbine du turbocompresseur permet au compresseur de fournir une pression de suralimentation suffisante déjà à bas régime du moteur et de bénéficier ainsi des conditions de pressions instantanées dans les tubulures d'admission et d'échappement correspondantes lorsqu'elles sont favorables à un post-remplissage des cylindres par de l'air frais. Ce même dispositif d'autorisation 11 n'autorise pas, ou empêche, une seconde levée de la soupape d'échappement vers un régime de l'ordre de 3.200 tours par minute lorsque les conditions de pression instantanée dans la tubulure d'admission et la tubulure d'échappement conduiraient à un post-remplissage des cylindres avec des gaz d'échappement, du fait du choix d'un turbocompresseur ayant une turbine de taille réduite. La désactivation de l'auto-suralimentation, qui est signalée sur la figure 2 par une zone de désactivation C, permet au moteur à combustion interne suralimenté de délivrer le couple maximal selon la courbe (f) au-delà du régime en début de la zone de désactivation C, c'est-à-dire, pour l'exemple représenté, au-delà d'environ 3.200 tours par minute.

La figure 3 représente le phénomène néfaste d'un post-remplissage d'un cylindre à bas régime du moteur lorsque le turbocompresseur a été choisi avec une turbine de taille importante. Le choix d'une turbine de taille importante peut limiter le post-remplissage des cylindres à un haut régime du moteur à combustion interne suralimenté, mais conduit à ce même phénomène à bas régime, comme cela a déjà été expliqué plus haut.

Sur la figure 3, la courbe (i) représente la pression instantanée dans la tubulure d'admission et la courbe (j) représente la pression instantanée dans la tubulure d'échappement. Les courbes (k) et (1) représentent respectivement une première et une seconde levée de la soupape d'échappement et la courbe (m) représente la levée de la soupape d'admission. La zone D représente la situation de pressions conduisant au phénomène néfaste d'un post-remplissage des cylindres avec des gaz d'échappement à bas régime du moteur.

La présente invention permet donc d'associer un dispositif de suralimentation ayant une turbine de petite taille et fonctionnant de manière optimale au bas régime d'un moteur à combustion interne suralimenté à un dispositif approprié autorisant une seconde levée de la soupape d'échappement d'un cylindre considéré. L'invention permet ainsi d'obtenir une amélioration considérable du fonctionnement, et notamment du rendement, du moteur sur l'ensemble de la plage de régime du moteur tant à bas régime qu'à des régimes plus élevés. Ceci est possible, à bas régime, du fait de la petite taille de la turbine du dispositif de suralimentation et du procédé d'auto-suralimentation, et à des régimes plus élevés du fait de l'utilisation d'un dispositif de contrôle autorisant une seconde ouverture des moyens d'ouverture et de fermeture de la tubulure d'échappement et permettant ainsi de désactiver l'auto-suralimentation à un haut régime du moteur.

## Revendications

1. Moteur à combustion interne (1) suralimenté ayant au moins deux cylindres (2, 4) dont chacun est relié à une tubulure d'admission (21, 41) d'air frais et à une tubulure d'échappement (23, 43) de gaz brûlés, les tubulures d'échappement d'au moins deux des cylindres étant reliés à un même collecteur d'échappement (6) et chacune des liaisons entre les cylindres et les tubulures respectives étant ouvertes et fermées à l'aide de moyens d'ouverture et de fermeture (22, 24, 42, 44) appropriés, les moyens d'ouverture et de fermeture (22, 24, 42, 44) étant commandés par des moyens de commande (10) conformés de manière à assurer, pendant la phase de remplissage d'un premier cylindre, une ouverture simultanée brève de la liaison d'admission et de la liaison d'échappement de ce cylindre afin d'obtenir un balayage tubulure d'admission / cylindre / tubulure d'échappement avec de l'air frais,
**caractérisé en ce qu'**il comprend un dispositif (11) destiné à autoriser une ouverture de la liaison d'échappement du premier cylindre en cours de remplissage lorsque la pression instantanée dans la tubulure d'échappement du premier cylindre due à la phase d'échappement d'un deuxième cylindre et la pression instantanée dans la tubulure d'admission du premier cylindre sont dans un rapport prédéterminé de l'une à l'autre tel qu'un post-remplissage du cylindre avec de l'air frais préalablement stocké dans la tubulure d'échappement est assuré.

2. Moteur à combustion interne selon la revendication 1, **caractérisé en ce que** le dispositif autorise une seconde ouverture de la soupape d'échappement lorsque le rapport de pressions prédéterminé est donné.

3. Procédé de commande d'un moteur à combustion interne suralimenté, le moteur comportant au moins deux cylindres dont chacun est relié à une tubulure d'admission d'air frais et à une tubulure d'échappement de gaz brûlés, les tubulures d'échappement des cylindres étant reliés à un même collecteur d'échappement et chacune des liaisons entre les cylindres et les tubulures respectives étant ouvertes et fermées à l'aide de moyens d'ouverture et de fermeture appropriés, les moyens d'ouverture et de fermeture étant commandés de manière à assurer, pendant l'ouverture de la liaison d'admission de l'un des cylindres, une ouverture simultanée de la liaison d'échappement de l'autre cylindre afin d'obtenir un balayage tubulure d'admission/cylindre/tubulure d'échappement avec de l'air frais,
**caractérisé en ce que** l'ouverture de la liaison d'échappement simultanément à l'ouverture de la liaison d'admission est soumise à la condition que les pressions instantanées dans la tubulure d'admission et dans la tubulure d'échappement du cylindre soient dans un rapport prédéterminé de l'une à l'autre tel qu'un post-remplissage du cylindre avec de l'air frais préalablement stocké dans la tubulure d'échappement est assuré.
